# EUROPEAN PATENT APPLICATION

(11) **EP 2 421 202 A1**
(43) Date of publication of application: **22.02.2012**
(21) Application number: 11177883.3
(22) Date of filing: 18.08.2011
(51) Int. Cl.: H04L 12/28, H04N 7/24, H04L 29/08

(54) **Wireless communication system**

(30) Priority: 19.08.2010 JP 2010184294
(71) Applicant: Funai Electric Co., Ltd., Daito-shi, Osaka (JP)
(72) Inventor: Nakase, Takafumi, Daito-shi, Osaka (JP)
(74) Representative: Grünecker, Kinkeldey, Stockmair & Schwanhäusser

(57) **Abstract**

The present invention discloses a wireless communication system comprising; a function and state maintenance unit that holds a function and a state of receiving side apparatus communicating through wireless communication; a reply unit, while the wireless communication is not established, when transmission side apparatus sends control data to the receiving side apparatus before establishing the wireless communication, that sends pseudo reply signal corresponding to the control data to the transmission side apparatus based on the function and state data held in the receiving side apparatus; a wireless communication establishment unit that establishes wireless communication; a command transmission unit that sends the control data to the receiving side apparatus through the established wireless communication.

## Description

### CROSS-REFERENCES TO RELATED APPLICATIONS

The present application is related to the Japanese Patent Application No. 2010-184294, filed August 19, 2010, the entire disclosure of which is expressly incorporated by reference herein.

### BACKGROUND OF THE INVENTION

### 1. Field of the Invention:

The present invention relates to a wireless communication system, in particularly, that wirelessly communicates a control data that follows the CEC (Consumer Electronics Control) standard through the HDMI (High-Definition Multimedia Interface).

### 2. Description of the Related Art:

An AV system that wirelessly communicates a video signal, an audio signal and control data between a source apparatus and a link apparatus is disclosed (for example, Japanese Patent Laid-Open (Tokuhyo) 2006-503,455, Japanese Patent Laid-Open No. 2004-343,725, Japanese Patent Laid-Open No. 2004-336, 729, and Japanese Patent Laid-Open No. 2001-077821).
As an interface to realize such a wireless communication, the HDMI (High-Definition Multimedia Interface) is known. Control data can be sent and received through the HDMI. Therefore, in the HDMI system, for example, one apparatus can be controlled to drive by control data sent from other apparatus.

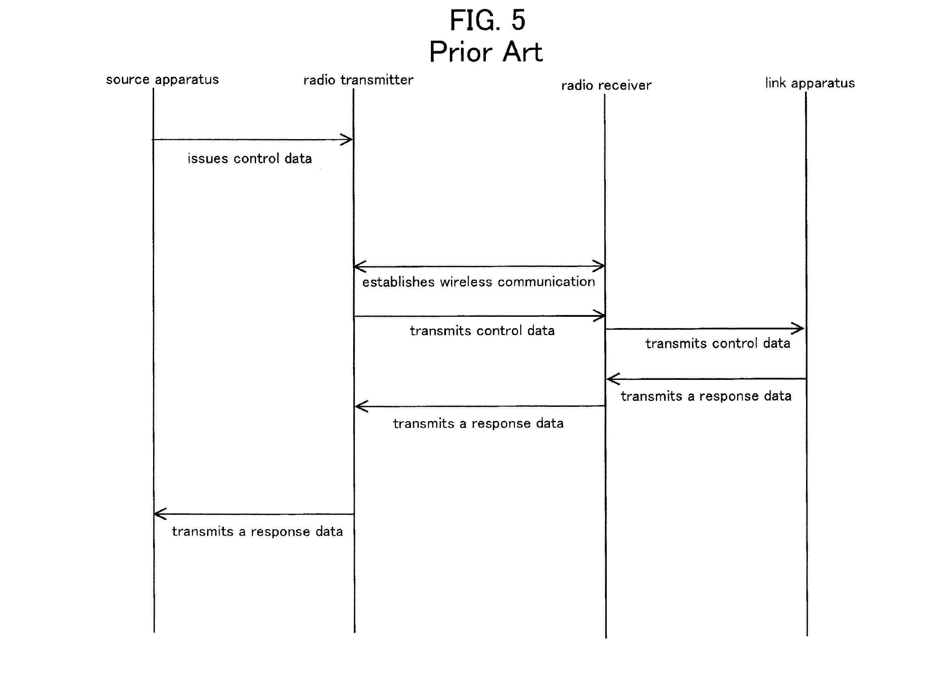

Figure 5 is a figure to explain a flow of a conventional communication that follows the HDMI standard between a source apparatus and a link apparatus. When the wireless communication is performed, between a source apparatus and a link apparatus, a radio transmitter and a radio receiver are intervened, and they convert various wired signals into a radio signal and thus they wirelessly communicate with each other.
For example, according to the standard, when control data are transmitted through the radio transmitter by the source apparatus, the link apparatus which received the control data replies response data (a reply signal) in return through the radio receiver.

While the communication is not performed in the conventional wireless communication, the establishment of the wireless communication may be cancelled in order to reduce electricity consumption. When the establishment of the wireless communication has been canceled, for example, if the source apparatus sends the control data, it is necessary to establish communication between the radio transmitter and the radio receiver, before performing communication of the control data.
However, it sometimes takes some period before the wireless communication has been established. Therefore the wireless communication may not be performed smoothly.

### BRIEF SUMMARY OF THE INVENTION

This invention provides a wireless communication system that can cancels the establishment of the communication while it does not perform wireless communication, and thus can reduce electricity consumption. Further, when the wireless communication is restarted, the wireless communication system can perform wireless communication smoothly.

According to an embodiment of the present invention, a wireless communication system that wirelessly communicate between apparatuses video signal, voice signal, and control data which follows HDMI standard comprises a function and state maintenance unit that holds a function and a state of receiving side apparatus communicating through wireless communication; a reply unit, while the wireless communication is not established, when transmission side apparatus sends control data to the receiving side apparatus before establishing the wireless communication, that sends pseudo reply signal corresponding to the control data to the transmission side apparatus based on the function and state data held in the receiving side apparatus; a wireless communication establishment unit that establishes wireless communication; a command transmission unit that sends the control data to the receiving side apparatus through the established wireless communication.

According to the embodiment, the function and state maintenance unit holds a function and a state of receiving side apparatus communicating through wireless communication.
In addition, the a reply unit, while the wireless communication is not established, when the transmission side apparatus sends control data to the receiving side apparatus before establishing the wireless communication, sends pseudo reply signal corresponding to the control data to the transmission side apparatus based on the function and state data held in the receiving side apparatus. And the command transmission unit sends the control data to the receiving side apparatus through the established wireless communication which the wireless communication establishment unit establishes.

Therefore the transmission side apparatus is able to receive the reply signal before the wireless communication has been established and carry out following process more effectively. Here, the transmission side means an apparatus that issues the control data, and the receiving side means an apparatus that receives the issued control data. Therefore the concept of the present invention includes a concept in that a link apparatus becomes the transmission side apparatus where the link apparatus issues the control data as well as in that a source apparatus becomes the transmission side apparatus.

### BRIEF DESCRIPTION OF THE DRAWINGS

Figure 1 is a block diagram to explain an AV system 100.
Figure 2 is a block diagram to explain an AV system 100.
Figure 3 is a figure to explain registering process performed by the AV system 100 in an embodiment.
Figure 4 is a figure to explain wireless communication process performed by the AV system 100 in the embodiment.
Figure 5 is a figure to explain a flow of the conventional communication when the wireless communication that follows an HDMI standard between the source apparatus and the link apparatus is performed.

### DETAILED DESCRIPTION OF THE INVENTION

In one of embodiments of this invention, status of the receiving side apparatus is judged by the function and the state of the receiving side apparatus. However, since the function and the state are variable, it will be better to be available to cope with such dynamic change. Therefore the wireless communication system may comprises an update unit that notifies the function and the state of the receiving side apparatus at certain scheduled time thus makes to perform update of the function and the state held. According to the embodiment, precision of practice in the process can be raised.

In addition, in another embodiment of this invention, the command transmission unit receives the reply signal which is sent for the control data after the communication is established from the receiving side apparatus, compares the reply signal that the reply unit replied and the reply signal replied by the receiving side apparatus, and notifies an error when the comparison results are different from each other.
According to the present invention, even if the response data which were issued artificially are different from the response data replied after the wireless communication has been established, stability of processing can be realized by notifying the error.

In addition, the function means a function corresponding to the control data, and the state means whether the receiving side apparatus is in a state to be able to perform corresponding process to the control data.

In a more concrete embodiment of the present invention, the wireless communication system is comprised of an update unit that notifies the function and the state of the receiving side apparatus at certain scheduled time thus makes to perform update of the function and the state held, and is characterised in the command transmission unit that receives the reply signal which is sent by the control data after the communication is established from the receiving side apparatus, compares the reply signal replied by the reply unit and the reply signal replied by the receiving side apparatus, and notifies an error when the comparison result is different from each other.

Hereinafter, one of embodiments of the present invention will be explained in a following orders.
1. The first embodiment:
   1.1. AV systems 100:
   1.2. Update and registering process:
   1.3. Process of wireless communication:
2. Other embodiments:

1. The first embodiment:
   1.1. AV systems 100:
      Hereinafter, the first embodiment of the present invention as a wireless communication system will be explained.

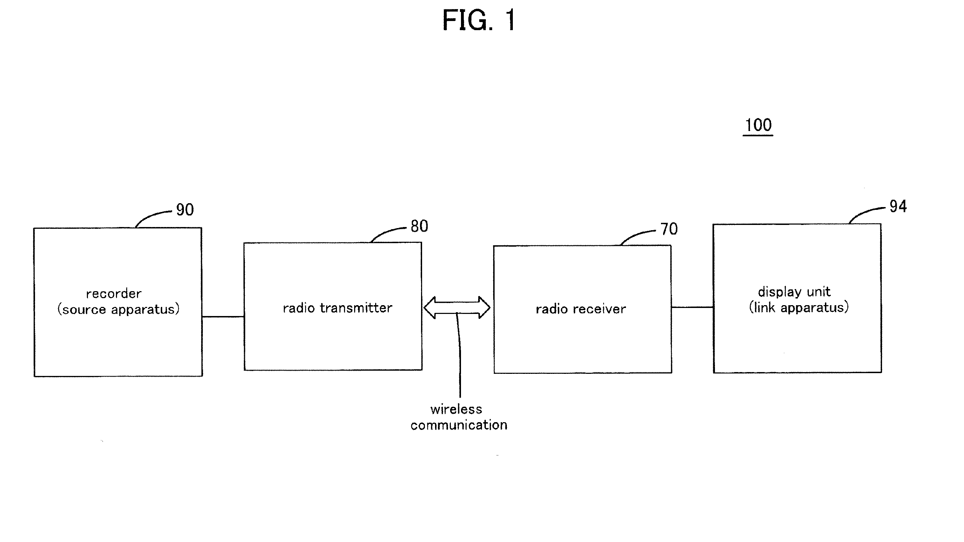

Figure 1 is a block diagram of AV system 100. The AV system 100 comprises a recorder 90 (a source apparatus), a display unit 94 (a link apparatus), a wireless communication system (a radio transmitter 80 and a radio receiver 70). The wireless communication system performs wireless communication between the recorder 90 and the display unit 94.

The recorder 90 can play picture data and sound data. The recorder 90 can outputs the data to the display unit 94. The data that the recorder 90 plays are converted into radio signals by the radio transmitter 80. The radio signals are received by the radio receiver 70. The radio signals are converted into digital data by the radio receiver 70 again, and they are output as picture and sound by the display unit 94. In addition, the wireless communication that the radio transmitter 80 and the radio receiver 70 performs follows the CEC standard. In the CEC standard, one device can control another device by transmitting control data from one device to another device.

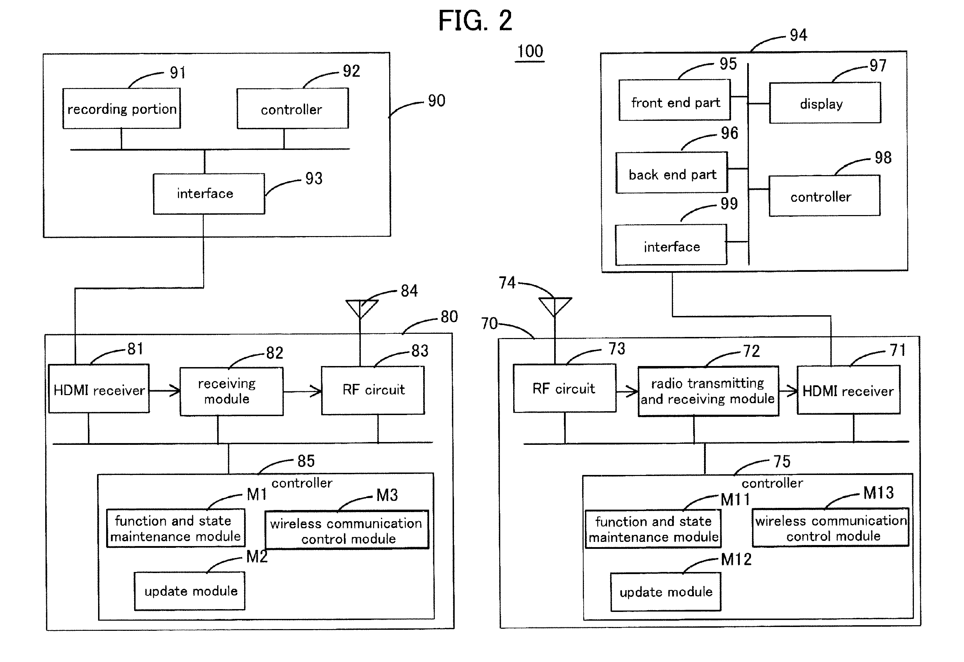

Figure 2 is a block diagram explaining an AV system 100. Hereinafter, based on figure 2, a concrete structure of each device in the AV system 100 will be explained.
The recorder 90 is comprised of a recording portion 91, a controller 92, and an interface 93. The recording portion 91 is comprised of a HDD (hard disk drive) and a BD (Blue-Ray Disk (registered trademark)). The recording portion 91 records picture data and sound data in the HDD or the BD. The controller 92 controls playing of various data recorded in the recording portion 91. The controller 92 issues control data (or response data). The interface 93 controls communication between the recorder 90 and the radio transmitter 80.

The command follows the CEC standard. And the control data prescribes orders to the receiving side apparatus by the transmission side apparatus. For example, the control data includes commands for recording orders and total management of power ON/OFF to the recorder 90 issued by the display unit 94. The response data are the commands that follow the CEC standard. And the apparatus that received the control data replies signals that represent the response data to the apparatus of the transmission side.

The display unit 94 is comprised of a front end part 95, a back end part 96, a display 97, a controller 98, and an interface 99. The front end part 95 includes a tuner part to receive television broadcast that the antenna received (not illustrated). The back end part 96 performs converting process of number of the pixels depending on a resolution of the display 97 to the picture data. The picture data are data of television broadcast input from the front end part 95 or input data from the interface 99. The display 97 displays a picture based on the picture data input from the back end part 96. The controller 98 generally controls driving of the display unit 94. The controller 98 issues control data and response data depending on an input command. The interface 99 controls communication between the display unit 94 and the radio receiver 70.

The radio transmitter 80 is connected to the recorder 90. The radio transmitter 80 converts picture data, sound data and control data (response data) which are transmitted from the recorder 90 into a radio signal and outputs them. The radio transmitter 80 is comprised of a HDMI receiver 81 and a radio transmitting and receiving module 82, a RF circuit 83, an antenna 84, and a controller 85.

The HDMI receiver 81 locates between the recorder 90 and the radio transmitting and receiving module 82. And the HDMI receiver 81 transfers various data between them. The radio transmitting and receiving module 82 performs reversible conversion between digital data and radio wave. The RF circuit 83 transmits radio wave converted by the radio transmitting and receiving module 82 to a certain high frequency as a radio signal through antenna 84. The RF circuit 83 modulate radio wave converted by the radio transmitting and receiving module 82 to a certain high frequency, and transmits the modulated radio signal through the antenna 84. When the RF circuit 83 receives radio signal through the antenna 84, the RF circuit 83 demodulates the radio signal and outputs it to the radio transmitting and receiving module 82.

The controller 85 is comprised of a CPU, a ROM, and a RAM. As for the ROM, program data for the CPU to carry out predetermined operation are recorded. The RAM acts as working area for the CPU. The CPU carries out program data recorded in the ROM, thus realizes functions of a function and state maintenance module (a function and state maintenance unit) M1, an update module M2, and a wireless communication control module M3.

A function and state maintenance module M1 controls each part of the radio transmitter 80 and performs update and registering process. The update and registering process is a process to record a function and a state of receiving side device that receives the control data. When the function and state maintenance module M1 is realized as one of functions of the radio transmitter 80, the function and state maintenance module M1 records the function and the state of the display unit 94 to which the radio receiver 70 is connected. Here, the function means a function corresponding to the control data. In addition, the state means whether a device that receives the control data is in a state to be able to perform corresponding process to the control data. And further it is a concept that includes a channel number that is being watched and heard, or the presence of the input of the data from other apparatuses.

The update module M2 controls each part of the radio transmitter 80. And the update module M2 makes the function and state maintenance module M1 update recorded function or state when the update module M2 receives functions sent from the receiving side apparatus, a notice of change, and a request for setting. The update module M2 realizes an update unit of the present invention.

The wireless communication control module M3 controls the wireless communication that follows the CEC standard. In other words, the wireless communication control module M3 makes each part of the radio transmitter 80 perform establishment of wireless communication between the radio receiver 70, communication of picture data, sound data and control data using the established wireless communication.
In the present embodiment, the wireless communication control module M3 issues a pseudo response data that will be sent for the transmission of control data while wireless communication is not established between the radio receiver 70 and the radio transmitter 80. And after the recorder 90 replies, the wireless communication control module M3 establishes wireless communication with the radio receiver 70. The wireless communication control module M3 realizes a wireless communication establishment unit, a reply unit, and a command transmission unit of the present invention.

The radio receiver 70 is connected to the display unit 94. And the radio receiver 70 converts radio signal transmitted from the radio transmitter 80 into picture data, sound data, and control data again, and outputs them to the display unit 94. The radio receiver 70 is comprised of a HDMI receiver 71, a radio transmitting and receiving module 72, a RF circuit 73, an antenna 74, and controller 75. The controller 71 is comprised of functions of a function and state maintenance module M11, an update module M12, a wireless communication control module M13. The structure and functions of the HDMI receiver 71, the radio transmitting and receiving module 72, the RF circuit 73, the antenna 74, and the controller 75 are almost same with those of the HDMI receiver 81, the radio transmitting and receiving module 82, the RF circuit 83, the antenna 84, and the controller 85. Therefore explanation of them will be omitted.

### 1.2. Update and registering process:

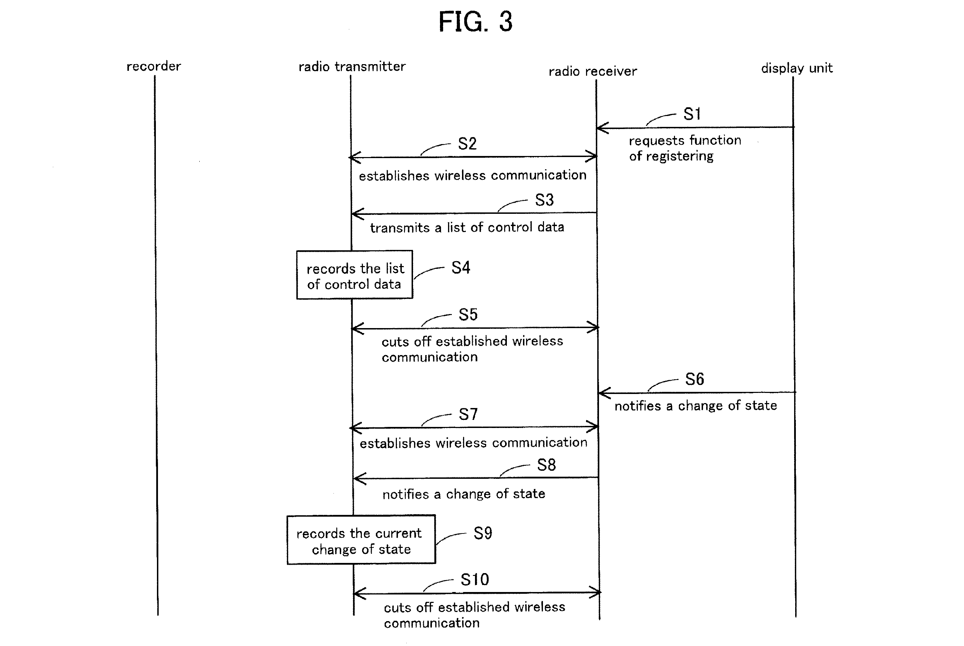

Figure 3 is a figure to explain registering process that is performed by the AV system 100 in this embodiment. Hereinafter, referring to figure 3, process to register the function and the state of the display unit 94 to the radio transmitter 80 will be explained.

When the registering processing is chosen by operating a wireless remote controller (not illustrated) in step S1, the display unit 94 requests the radio receiver 70 the function of registering.

In step S2, the wireless communication control module M13 of the radio receiver 70 establishes wireless communication between the radio transmitter 80 and the radio receiver 70.

In step S3, the update module M12 of the radio receiver 70 transmits a list of control data which can be performed by the display unit 94 through the established wireless communication to the radio transmitter 80.

In step S4, based on the received control data, a function and state maintenance module M1 of the radio transmitter 80 records the list of control data which can be performed by the display unit 94 into an internal memory. Thereafter, the radio transmitter 80 judges the function of the display unit 94 based on the recorded control data.

In step S5, the wireless communication control module M3 of the radio transmitter 80 cuts off the established wireless communication.

Next, a process that the state of the display unit 94 is notified to the radio transmitter 80 and the update is promoted will be explained. When the display unit 94 receives input from an external equipment except the recorder 90, in step S6, the display unit 94 notifies current state (a change of state) to the radio receiver 70. In step S7, the wireless communication control module M13 of the radio receiver 70 establishes wireless communication between the radio transmitter 80 and the radio receiver 70.

In step S8, the update module M12 of the radio receiver 70 transmits a current state of the display unit 94 to the radio transmitter 80 through the wireless communication.

In step S9, based on the change of state of the display unit 94, the function and state maintenance module M1 of the radio transmitter 80 records the current change of state of the display unit 94 that the radio transmitter 80 received into the internal memory.

In step S10, the wireless communication control module M3 of the radio transmitter 80 cuts off the established wireless communication. In addition, when the input from the external equipment (not illustrated) stopped in the display unit 94, the radio transmitter 80 records a new change of state (the end of the external input) of the display unit 94 by carrying out processes of step S6 to S10. Therefore, when the function and state of the transmitting side apparatus have changed, precision of practice in the process can be raised. So far, the update and registering process have been explained.

### 1.3. Wireless communication processing:

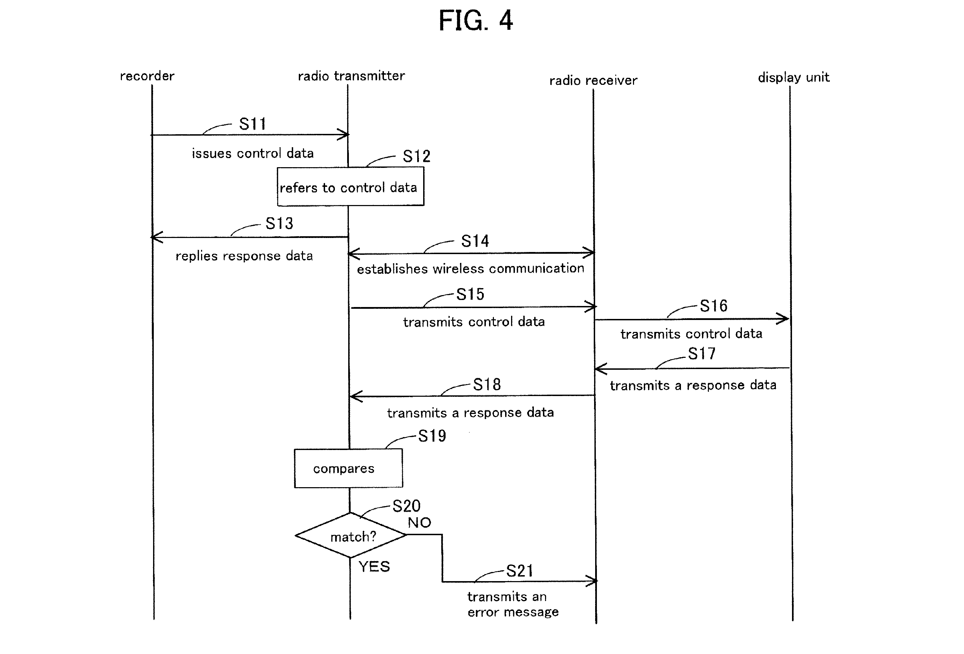

Figure 4 is a figure to explain wireless communication process performed by the AV system 100 in the present embodiment. The process where the control data are transmitted to the display unit 94 from the recorder 90 is shown in the figure as one example. Hereinafter, referring to figure 4, the wireless communication process will be explained.

When the recorder 90 issues control data that is to be transmitted to the display unit 94 in step S11, the wireless communication control module M3 of the radio transmitter 80 refers to control data which the display unit 94 can perform and current state of the display unit 94 in step S12. Those control data and current state are recorded in the internal memory.

In step S13, the wireless communication control module M3 of the radio transmitter 80 replies response data to the recorder 90 depending on the reference result of step S12. When the issued control data exists in the list of the recorded control data and the recorded state of the display unit 94 is a state which the display unit 94 is capable of receiving the control data, the wireless communication control module M3 replies affirmative response data to the recorder 90 for a reply to the control data.

In step S14, the wireless communication control module M3 establishes wireless communication between the radio transmitter 80 and the radio receiver 70. In step S15, the wireless communication control module M3 transmits control data to the radio receiver 70 through the established wireless communication.

In step S16, the wireless communication control module M13 of the radio receiver 70 converts the received control data into a digital signal, and transmits the digital signal to the display unit 94. The display unit 94 receives the digital code from the radio receiver 70 and gets the control data. In step S17, the display unit 94 issues a response data corresponding to the control data, and transmits the response data to the radio receiver 70. Then the radio receiver 70 receives the response data.

In step S18, the radio receiver 70 converts the response data into a radio signal and transmits it to the radio transmitter 80. Then the radio transmitter 80 receives the radio signal and gets the response data. In step S19, the wireless communication control module M3 of the radio transmitter 80 compares the response data which is issued in step S13 with the received response data.

When the response data issued in step S13 matches with the received response data from the display unit 94 (step S20:Yes), the process concerning the issued control data will be finished. On the other hand, when the issued response data are different from the received response data from the display unit 94 in step S13 (step S20:NO), the wireless communication control module M3 issues an error message and transmits the message to the radio receiver 70 (step S21). When the display unit 94 receives the error message, the display unit 94 warns users by showing the error message on screen. Therefore, even if the pseudo response data which were issued are different from the response data replied after the wireless communication has been established, stability of processing can be realized by notifying the error. The first embodiment is as mentioned above.

As mentioned above, in the present embodiment of the AV system 100, the function and the state of the receiving side apparatus that makes communication through radio are held beforehand. And while the wireless communication is not established, when the transmission side apparatus sends control data to the receiving side apparatus before establishing the wireless communication, the AV system 100 sends a pseudo reply signal corresponding to the control data to the transmission side apparatus based on the function and state data held in the receiving side apparatus at first, then sends the control data to the receiving side apparatus through the established wireless communication. Therefore the transmission side apparatus can receive the reply signal before the wireless communication has been established and perform following process more effectively. In addition, since radio transmission can be cut off while the wireless communication is not used, thus electricity consumption can be reduced.

### 2. Other embodiments:

There are various embodiments of the present invention. In the above mentioned structure, the recorder is the source apparatus and the display unit is the link apparatus. However it is just one example of the present invention. Thus where the system that adapts the HDMI standard for the wireless communication between apparatus, the present invention may be applied to between the another kind of apparatus.

While the invention has been particularly shown and described with respect to preferred embodiments thereof, it should be understood by those skilled in the art that the foregoing and other changes in form and detail may be made therein without departing from the spirit and scope of the invention as defined in the appended claims.

Although the invention has been described in considerable detail in language specific to structural features and or method acts, it is to be understood that the invention defined in the appended claims is not necessarily limited to the specific features or acts described. Rather, the specific features and acts are disclosed as preferred forms of implementing the claimed invention. Therefore, while exemplary illustrative embodiments of the invention have been described, numerous variations and alternative embodiments will occur to those skilled in the art.

It should further be noted that throughout the entire disclosure, the labels such as left, right, front, back, top, bottom, forward, reverse, clockwise, counter clockwise, up, down, or other similar terms such as upper, lower, aft, fore, vertical, horizontal, proximal, distal, etc. have been used for convenience purposes only and are not intended to imply any particular fixed direction or orientation. Instead, they are used to reflect relative locations and/or directions/orientations between various portions of an object.

In addition, reference to "first," "second," "third," and etc. members throughout the disclosure (and in particular, claims) is not used to show a serial or numerical limitation but instead is used to distinguish or identify the various members of the group.

## Claims

1. A wireless communication system that wirelessly communicate between apparatuses video signal, voice signal, and control data which follows HDMI standard comprising:
a function and state maintenance unit that holds a function and a state of receiving side apparatus communicating through wireless communication,
a reply unit, while the wireless communication is not established, when transmission side apparatus sends control data to the receiving side apparatus before establishing the wireless communication, that sends pseudo reply signal corresponding to the control data to the transmission side apparatus based on the function and state data held in the receiving side apparatus,
a wireless communication establishment unit that establishes wireless communication,
a command transmission unit that sends the control data to the receiving side apparatus through the established wireless communication.

2. A wireless communication system according to Claim 1, further comprising an update unit that notifies the function and the state of the receiving side apparatus at certain scheduled time thus makes to perform update of the function and state held.

3. A wireless communication system according to any one of claims 1 or 2, wherein
the command transmission unit that receives the reply signal which is sent for the control data after the communication is established from the receiving side apparatus, compares the reply signal that the reply unit replied and the reply signal replied by the receiving side apparatus, and notifies an error when the comparison results are different from each other.

4. A wireless communication system according to any one of claims 1 to 3, wherein
the function means a function corresponding to the control data, and the state means whether the receiving side apparatus is in a state to be able to perform corresponding process to the control data.

5. A wireless communication system according to Claim 1, further comprising an update unit that notifies the function and the state of the receiving side apparatus at certain scheduled time thus makes to perform update of the function and state held, wherein
the command transmission unit that receives the reply signal which is sent by the control data after the communication is established from the receiving side apparatus, compares the reply signal replied by the reply unit and the reply signal replied by the receiving side apparatus, and notifies an error when the comparison results are different from each other.
